# EUROPÄISCHE PATENTSCHRIFT

(11) **EP 0 865 260 B1**
(45) Veröffentlichungstag und Bekanntmachung des Hinweises auf die Patenterteilung: **04.08.1999**
(21) Anmeldenummer: 96938901.4
(22) Anmeldetag: 03.12.1996
(51) Int. Cl.: A61C 8/00

(54) **EINHEILKAPPE FÜR EIN DENTALIMPLANTAT**
HEALING CAP FOR DENTAL IMPLANTS
COIFFE DE CICATRISATION POUR IMPLANT DENTAIRE

(30) Priorität: 04.12.1995 CH 341795
(43) Veröffentlichungstag der Anmeldung: 23.09.1998
(73) Patentinhaber: Institut Straumann AG, 4437 Waldenburg (CH)
(72) Erfinder: BUSER, Daniel, CH-3074 Muri (CH); SCHÄR, Alex, CH-4125 Riehen (CH)
(74) Vertreter: Ullrich, Gerhard, Dr.
(86) Internationale Anmeldenummer: CH9600426
(87) Internationale Veröffentlichungsnummer: WO9720518

(56) Entgegenhaltungen:
- EP-A- 0 423 798
- EP-A- 0 630 621
- US-A- 5 338 196
- PRACTICAL PERIODONTICS AND AESTHETIC DENTISTRY, Bd. 5, Nr. 5, Juni 1993 - Juli 1993, RAMSEY, NEW JERSEY, US, Seiten 81-87, XP002026152 LAZZARA: "Managing The Soft Tissue Margin: The Key To Implant Aesthetics" in der Anmeldung erwähnt

## Beschreibung

### Anwendungsgebiet der Erfindung

Die Erfindung betrifft eine auf einem enossal gesetzten Dentalimplantat fixierbare Einheilkappe mit einer zur Implantatschulter passfähigen Gegenschulter, welche unterhalb der Dachpartie der Einheilkappe liegt.

Die Einheilkappe wird mittels einer okklusal applizierbaren Schraube auf dem Implantat fixiert. Nach dem Entfernen der Einheilkappe benutzt man zum Verschluss sowie zum Schutz des Implantats eine herkömmliche Schutzkappe als Übergangsprovisorium.

Beim Einsetzen eines Implantats in die Maxilla oder die Mandibula endet der chirurgische Ablauf der enossalen Implantation im Prinzip mit dem Aufsetzen einer speziellen Einheilkappe, bevor die Papillen und die Gingiva möglichst präzise reponiert und mit Nähten adaptiert werden. Diese Einheilkappen - zumeist aus einem biokompatiblen Material bestehend - verlängern das Implantat während der mehrmonatigen Einheilphase bis zur Oberfläche der Weichgewebe. Somit erreicht man eine transgingivale Einheilung, obwohl die Implantatschulter subgingival lokalisiert ist. Besonders bei ästhetischen Restaurationen ist eine derartige Einsetztiefe des Implantats wünschenswert, um später keinerlei Implantatoberfläche sichtbar werden zu lassen.

Neben der Biokompatibilität werden an Einheilkappen Anforderungen hinsichtlich des perfekten, möglichst spaltfreien Sitzes auf dem Implantat, des Schutzes des Implantatkopfes, der Ausformung der Schleimhaut und der praktischen Handhabbarkeit gestellt.

### Stand der Technik

Zum temporären Verschluss von ITI®-Implantaten - diese weisen einen sich nach oben trichterförmig erweiternden Implantatkopf und eine zuoberst liegende, radial umlaufende Implantatschulter mit einem Abschrägungswinkel von 45° auf - sind einteilige Einheilkappen bekannt z.B. US-A-5 368 483 Solcherart Einheilkappen besitzen eine im Prinzip zylindrische, flache Kopfpartie, welche an der dem Implantat zugewandten Seite eine Aushöhlung aufweist, die zur Implantatschulter komplementär ist. Oberseitig gibt es eine Eingriffskontur für ein Schraubwerkzeug, während sich unterhalb der Kopfpartie ein Gewindezapfen erstreckt, der in die axiale Innenbohrung im Implantat einschraubbar ist. Zwingen die Platzverhältnisse zur Verwendung einer Einheilkappe mit einem kleineren Kopf, so steht auch eine Einheilkappe zur Verfügung, deren Kopf im Innenkonus des Implantats versenkbar ist. Vgl. die Darstellungen in: Internationales Journal für Paradontologie & Restaurative Zahnheilkunde, Sonderdruck, 13. Jg., H. 5, 1993, Seiten 397 und 414.

Die insoweit erwähnten Einheilkappen haben den Nachteil, dass sie durch die Kontur nicht optimal zur Vorformung der Gingiva beitragen und insbesondere im anterioren und posterioren Bereich vom Patienten als störend empfunden werden; die im Kopf verkleinerten Einheilkappen schützen die Implantatschulter nicht mehr.

Einteilige Einheilkappen werden ferner in der EP 0 423 798 B1, in der Firmenschrift: 3i® - IMPLANT INNOVATIONS® - The Emergence Profile System®, 1993 sowie in PRACTICAL PERIODONTICS AND AESTHETIC DENTISTRY, Vol. 5 No. 5, June/July 1993 vorgeschlagen. Diese Einheilkappen mögen sich zwar teilweise positiv auf die Vorformung der Gingiva auswirken, nach vestibulär hingegen wird keine Verbesserung erzielt.

Zudem eignen sich diese Einheilkappen zumeist nicht für Implantate mit einer abgeschrägten Schulter.

Ferner sind zweiteilige Einheilkappen bekannt, die aus der eigentlichen Einheilkappe sowie einer im Kappenkopf von oben einführbaren und darin versenkten, okklusal applizierten Schraube (nachstehend vereinfacht als Okklusalschraube bezeichnet) bestehen. Die Okklusalschraube durchdringt die Einheilkappe zentrisch und axial, stützt sich darin ab, greift ebenfalls in die im Implantat vorgesehene Innenbohrung ein und drückt somit die Einheilkappe auf die Implantatschulter. Vgl. die Darstellungen in: Schroeder/Sutter/Buser/Krekeler: Orale Implantologie. Georg Thieme Verlag Stuttgart, New York, 2. Aufl., 1994, Seiten 309f. Bei diesen Einheilkappen ist neben den vorerwähnten Nachteilen die Handhabung mit den zwei kleinen Teilen - die Einheilkappe und die lose darin steckende Okklusalschraube - recht heikel.

### Aufgabe der Erfindung

Resümierend ist somit festzustellen, dass die bis dato bekannten Einheilkappen allesamt nicht als optimal angesehen werden können. Der Erfindung liegt daher das Problem zugrunde, eine Einheilkappe zu schaffen, die sich durch einen soliden Sitz auf dem Implantat, eine vorteilhafte Vorformung und Anlage der Gingiva, eine ästhetisch einwandfreie Konturierung und Manipulierung der Papillen - insbesondere im augenfälligen Frontzahnbereich - sowie durch eine unproblematische Handhabung auszeichnet.

### Wesen der Erfindung

Das Konstruktionsprinzip der vorgeschlagenen, schlüssig auf dem Implantat fixierbaren Einheilkappe besteht darin, dass an ihrer seitlichen Dachpartie eine labial zu positionierende, partielle bis gänzlich umlaufende Abschrägung vorgesehen ist. An der Unterseite weist die Einheilkappe Eine sich radial erstreckende Ausnehmung auf, so dass eine zur Implantatschulter komplementäre Gegenschulter entsteht. Unterhalb der Dachpartie ist ein sich axial ausdehnender, konischer Zapfen vorgesehen, welcher zur oberen Partie der Innenbohrung im Implantat komplementär ist. In einer bevorzugten Ausführungsform stellt die axiale Durchgangsbohrung durch die Einheilkappe zur Aufnahme einer Okklusalschraube eine Gewindebohrüng dar. Die Okklusalschraube besitzt einen in der Deckfläche der Einheilkappe versenkbaren Schraubenkopf mit einer Innenkontur zum Ansatz eines Eindrehwerkzeugs. Vom Schraubenkopf verläuft der Schraubenschaft, welcher zuvorderst eine Gewindepartie und nahe dem Schraubenkopf eine durchmesserreduzierte, glatte Schaftpartie aufweist.

Dank der Erfindung steht nunmehr eine Einheilkappe zur Verfügung, mittels der die Gingiva in natürlich erscheinender Position geformt wird, d.h. die umliegenden Weichteile werden ästhetisch konditioniert. Ferner gewährleistet die Einheilkappe einen soliden und möglichst spaltfreien Sitz auf dem Implantat, und es ist für eine wesentlich verbesserte Handhabbarkeit gesorgt. Bei Verwendung einer Okklusalschraube wird diese vor dem Einsetzen der Einheilkappe darin eingeschraubt, so dass im Prinzip mit nur einem Teil hantiert werden muss. Die gewindelose Schaftpartie an der Okklusalschraube erlaubt deren freies Festziehen - ohne Mitdrehen der Schutzkappe -, da beim tieferen Eindrehen der Okklusalschraube das Aussengewinde des Schraubenschafts mit dem in der Einheilkappe befindlichen Innengewinde ausser Eingriff kommt.

### Zeichnungen und Ausführungsbeispiel

Anhand der beiliegenden Zeichnungen erfolgt nachstehend die detaillierte Beschreibung eines Ausführungsbeispiels der erfindungsgemässen Einheilkappe mit zugehöriger Okklusalschraube, wobei abschliessend mögliche Modifikationen erwähnt werden. Es zeigen:
- Figur 1A:: die Einheilkappe in der Frontansicht als Teilschnitt;
- Figur 1B:: die Draufsicht gemäss Figur 1A;
- Figur 2A:: die Okklusalschraube in Frontansicht;
- Figur 2B:: die Draufsicht gemäss Figur 2A;
- Figur 3A:: ein Vollschraubenimplantat mit aufgesetzter, mittels einer Okklusalschraube fixierten Einheilkappe; und
- Figur 3B:: die Darstellung gemäss Figur 3A mit höherer Einheilkappe.

### Figuren 1A und 1A

Die Einheilkappe **100** besitzt zuoberst eine im Prinzip zylindrische und pilzförmige Dachpartie **110** und einen an deren Unterseite zentrisch ansetzenden Zapfen **120**. Axial durch die Einheilkappe **100** erstreckt sich eine Durchgangsbohrung **130**.

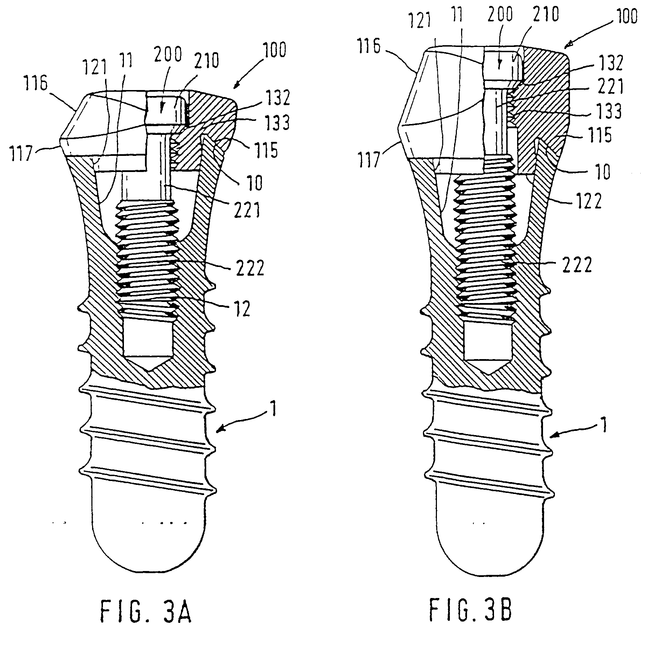

Die Deckfläche **111** der Dachpartie **110** ist leicht konvex und der Übergang **112** zur äusseren, radial umlaufenden Mantelfläche **113** abgerundet. Die Mantelfläche **113** selbst ist ebenfalls konvex und mündet an der kreisförmigen Schulterkante **114**. Von der Schulterkante **114** hin zum Zapfen **120** existiert eine kreisringförmige Konusfläche, die die komplementäre Gegenschulter **115** zur Implantatschulter **10** (s. Figuren 3A und 3C) bildet. Im labial positionierten Bereich ist an der Dachpartie **110** eine an der Deckfläche **111** beginnende Abschrägung **116** vorgesehen, die sich etwa über den halben Umfang erstreckt, seitlich harmonisch ausläuft und nach unten hin vor Erreichen der Schulterkante **114** endet, so dass eine partielle Phase **117** entsteht.

Der Zapfen **120** ist zumindest an seinem unteren Auslauf **121** der Innenkontur des Implantats **1** angepasst, d.h. hier konisch verjüngt. Diese Konizität harmoniert mit dem Innenkonus **11** des Implantats **1** (s. Figuren 3A und 3B).

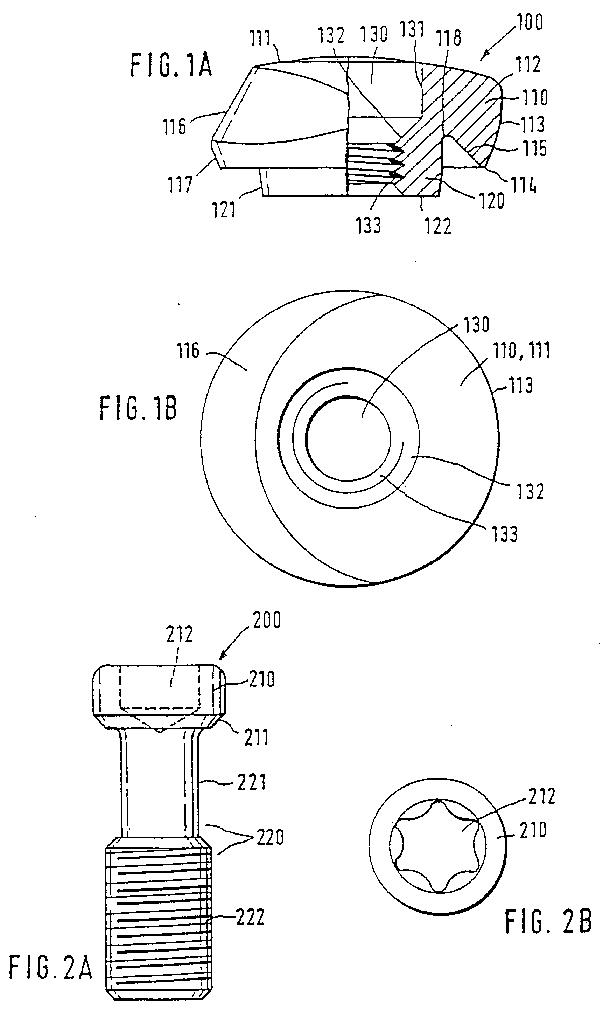

Die Durchgangsbohrung **130** weist mehrere unterschiedliche Abschnitte auf. Beginnend von der Deckfläche **111** ist zuerst eine Schraubenkopfaufnahme **131** mit einem unteren Konussitz **132** vorgesehen, auf dem sich die komplementäre Konusbasis **211** des Schraubenkopfes **210** der Okklusalschraube **200** abstützt (s. Figur 2A). Vom Konussitz **132** abwärts erstreckt sich ein gegenüber der Schraubenkopfaufnahme **131** durchmesserreduzierter Innengewindeabschnitt **133**, der an der Unterseite **122** des Zapfens **120** mündet.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

### Figuren 2A und 2B

Die Okklusalschraube **200** besitzt zuoberst den verdickten Schraubenkopf **210**, an dessen Oberseite eine Eingriffskontur **212** für ein komplementäres Eindrehwerkzeug vorgesehen ist. An der Unterseite des Schraubenkopfes **210** befindet sich die mit dem Konussitz **132** korrespondierende Konusbasis **211**. Abwärts vom Schraubenkopf **210** erstreckt sich axial der Schraubenschaft **220**, welcher sich in eine glatte Schaftpartie **221** und in eine Gewindepartie **222** teilt. An die Konusbasis **211** schliesst sich die Schaftpartie **221** an und an diese die Gewindepartie **222**, wobei letztere gegenüber der glatten Schaftpartie **221** im Durchmesser erweitert und gegenüber dem Schraubenkopf **210** durchmesserreduziert ist.

### Figur 3A

Auf dem Implantat **1** - hier ein Vollschraubenimplantat - ist die Einheilkappe **100** aufgesetzt und mittels einer Okklusalschraube **200** fixiert. Hierbei sitzt die Gegenschulter **115** der Einheilkappe **100** auf der Implantatschulter **10** auf, der Schraubenkopf **210** stützt sich in der Durchgangsbohrung **130** auf dem Konussitz **132** ab und die Gewindepartie **222** der Okklusalschraube **200** greift in das im Implantat **1** befindliche Innengewinde **12** ein. Der konische Auslauf **121** des Zapfens **120** fügt sich passgerecht in den Innenkonus **11** im Implantat **1** ein und zentriert dadurch die Einheilkappe **100** auf dem Implantat **1**.

### Figur 3B

Für bestimmte anatomische Gegebenheiten bzw. bei einem tiefer gesetzten Implantat **1**, steht eine Einheilkappe **100** mit einer erhöhten Dachpartie **110** zur Verfügung. Entsprechend vergrössert sich auch die Abschrägung **116** sowie die Länge der Durchgangsbohrung **130**. Auch ist es möglich, den Innengewindeabschnitt **133** in der Einheilkappe **100** bereits vor Austritt aus der Unterseite **122** enden zu lassen, wobei dann der unterste Abschnitt der Durchgangsbohrung **130** glatt ist.

In der Regel wird nach einer Einheilphase von ca. sieben Wochen die erfindungsgemässe Einheilkappe **100** durch eine herkömmliche Einheilkappe ausgewechselt, um für eine weitere Konditionierung des Zahnfleisches zu sorgen. Nach Abschluss der gesamten Einheilphase kann die Abdrucknahme erfolgen. Als vorübegehendes Provisorium zur Ausfüllung der Zahnlücke bzw. des Sulcus sowie als Schutz für die Implantatschulter **10** wird man eine Schutzkappe aufsetzen.

Zur vorbeschriebenen Einheilkappe **100** sind weitere konstruktive Variationen realisierbar. Hier ausdrücklich erwähnt seien noch:
- Die Abschrägung **116** kann die Gestalt besitzen, dass die gegenüberliegenden Halbseiten der Dachpartie **110** teilweise oder zueinander angrenzend abgeschrägt sind.
- Der Zapfen **120** könnte so weit verkürzt werden, dass im Übergang zur Gegenschulter **115** eine blosse Zentrierwulst **118** entsteht.
- Die Einheilkappe **100** kann im Prinzip rund oder oval und mit zusätzlichen Aus- bzw. Einbuchtungen gestaltet sein.
- Die Eingriffskontur **212** im Schraubenkopf **210** kann ein Kreuzschlitz, ein Vielkant oder eine herkömmliche nichtrotationssymmetrische Kontur sein.

## Patentansprüche

1. Eine auf einem enossal gesetzten Dentalimplantat (**1**) fixierbare Einheilkappe (**100**) mit: a) einer zur Inplantatschulter (**10**) passfähigen Gegenschulter (**115**), welche unterhalb der Dachpartie (**110**) liegt; b) einer an der Dachpartie (**110**) vorhandenen Abschrägung (**116**); und c) einer axialen Durchgangsbohrung (**130**), bestimmt zur Aufnahme einer von okklusal applizierbaren Schraube (**200**), **dadurch gekennzeichnet**, dass
d) die Abschrägung (**116**) partiell umläuft, an der Deckfläche (**111**) der Dachpartie (**110**) beginnt und apikal und nach aussen verläuft, so dass sie vor Erreichen der Schulterkante (**114**), welche die radial umlaufende Unterkante der Dachpartie (**110**) bildet, endet, und eine verbleibende Phase (**117**) bildet.

2. Einheilkappe (**100**) nach Anspruch 1, **dadurch gekennzeichnet**, dass sich die Abschrägung (**116**)
a) etwa über den halben, radialen Umfang der Mantelfläche (**113**) erstreckt und seitlich harmonisch ausläuft oder
b) sich die Abschrägung (**116**) auf die gegenüberliegenden Halbseiten der Dachpartie (**110**) teilweise oder zueinander angrenzend erstreckt.

3. Einheilkappe (**100**) nach Anspruch 1, **dadurch gekennzeichnet**, dass
a) an der Unterseite der Dachpartie (**110**) ein axialer Zapfen (**120**) ansetzt, wobei zumindest dessen Auslauf (**121**) komplementär zur Innenkontur (**11**) des Implantats (**1**) gestaltet ist und
b) sich zwischen der Schulterkante (**114**), hin zum Ansatz des Zapfens (**120**), die kreisringförmige Gegenschulter (**115**) erstreckt und
c) sich innerhalb der Durchgangsbohrung (**130**) eine Schraubenkopfaufnahme (**131**) für eine okklusal applizierbare Schraube (**200**) mit einem Konussitz (**132**) sowie ein davon unterhalb gelegener Innengewindeabschnitt (**133**) befindet und
d) der Übergang (**112**) von der Deckfläche (**111**) zur Mantelfläche (**113**) abgerundet ist, wobei die Mantelfläche (**113**) ausserhalb der Abschrägung (**116**) eine konvexe Kontur besitzt.

4. Einheilkappe (**100**) nach Anspruch 3, **dadurch gekennzeichnet**, dass der Zapfen (**120**) stumpfartig ausgebildet ist, wodurch im Übergang zur Gegenschulter (**115**) eine blosse Zentrierwulst (**118**) entsteht.

5. Einheilklappe (**100**) nach einem der Ansprüche 1 bis 4, **dadurch gekennzeichnet**, dass eine okklusal applizierbare Schraube (**200**) zum Fixieren der Einheilkappe (**100**) auf dem Implantat (**1**) vorgesehen ist und die Schraube (**200**) an ihrem Schraubenschaft (**220**), unterhalb des Schraubenkopfs (**210**), eine gewindelose Schaftpartie (**221**) aufweist, welche auch gegenüber der abschliessenden Gewindepartie (**222**) durchmesserreduziert ist.

6. Einheilkappe (**100**) nach Anspruch 5, **dadurch gekennzeichnet**, dass
a) am Übergang der Schraube (**200**) zwischen dem Schraubenkopf (**210**) und dem Schraubenschaft (**220**) eine zum Konussitz (**132**) komplementäre Konusbasis (**211**) vorgesehen ist; und
b) die Oberseite des Schraubenkopfs (**210**) eine vertiefte Eingriffskontur (**212**) zum Ansetzen eines Eindrehwerkzeugs besitzt.

## Claims

1. An healing cap (**100**) which can be fixed on an intraossally positioned dental implant (**1**) having:
a) a mating shoulder (**115**) which can be matched to a shoulder (**10**) of the implant (**1**) and lies below a roof part (**110**) of the healing cap (**100**);
b) a bevel (**116**) provided on the roof part (**110**); and
c) a through-bore (**130**) extending axially through the healing cap (**100**) and intended for receiving an occlusally applicable screw (**200**), characterized in that
d) the bevel (**116**) is partly encircling, which bevel (**116**) starts at a top surface (**111**) of the roof part (**110**) and runs apically and outwards, so that it ends prior to reaching a shoulder edge (**114**) which forms the radially encircling lower edge (**114**) of the roof part (**110**) and which forms a remaining chamfer (**117**).

2. Healing cap (**100**) according to Claim 1, characterized in that the bevel (**116**)
a) extends over approximately half the radial circumference of the lateral surface (**113**) and laterally tapers smoothly, or
b) the bevel (**116**) on the opposite half-sides of the roof part (**110**) extends partially or adjacent to one another.

3. Healing cap (**100**) according to Claim 1, characterized in that
a) an axial pin (**120**) starts on the underside of the roof part (**110**), at least the end portion (**121**) of which pin (**120**) is of complementary configuration to the inner contour (**11**) of the implant (**1**), and
b) the mating shoulder (**115**) in the form of a circular ring extends between the shoulder edge (**114**) towards the start of the pin (**120**), and
c) a screw head receiving part (**131**) for an occlusally applicable screw (**200**) is situated inside the through-bore (**130**) and has a conical seat (**132**) and an internally threaded section (**133**) located below this seat, and
d) the transition (**112**) from the top surface (**111**) to the lateral surface (**113**) is rounded off, the lateral surface (**113**) apart from the bevel (**116**) having a convex contour.

4. Healing cap (**100**) according to Claim 3, characterized in that the pin (**120**) is of frustum-like design, a mere centring bead (**118**) being formed in the transition to the mating shoulder (**115**).

5. Healing cap (**100**) according to one of Claims 1 to 4, characterized in that an occlusally applicable screw (**200**) for fixing the healing cap (**100**) on the implant (**1**) is provided and the screw (**200**) has an unthreaded shank part (**221**) on its screw shank (**220**), below the screw head (**210**), which unthreaded shank part is also of reduced diameter with respect to the terminating threaded part (**222**).

6. Healing cap (**100**) according to Claim 5, characterized in that
a) a conical base (**211**) complementary to the conical seat (**132**) is provided at the transition of the screw (**200**) between the screw head (**210**) and the screw shank (**220**), and
b) the upper side of the screw head (**210**) has a recessed engagement contour (**212**) for attaching a turning tool.

## Revendications

1. Calotte de cicatrisation in situ (100) pouvant être fixée sur un implant dentaire (1) dans l'os, comprenant:
a) un contre-épaulement (115) adaptable à l'épaulement de l'implant (10), qui se situe sous la partie de couverture (110),
b) un chanfrein (116) prévu sur la partie de couverture (110); et
c) un alésage axial traversant (130), prévu pour recevoir une vis (200) insérable occlusalement, caractérisée en ce que
d) le chanfrein (116) s'étend partiellement autour de la périphérie, commence au niveau de la face supérieure (111) de la partie de couverture (110) et s'étend apicalement et vers l'extérieur, de sorte qu'il se termine avant d'atteindre le bord de l'épaulement (114), qui forme l'arête inférieure s'étendant radialement sur la périphérie de la partie de couverture (110), et forme une phase permanente (117).

2. Calotte de cicatrisation in situ (100) selon la revendication 1, caractérisée en ce que
a) le chanfrein (116) s'étend approximativement sur la moitié du pourtour radial de la surface d'enveloppe (113), et se termine harmonieusement latéralement ou
b) le chanfrein (116) s'étend partiellement sur les moitiés opposées de la partie de couverture (110) ou leur est adjacent.

3. Calotte de cicatrisation in situ (100) selon la revendication 1, caractérisée en ce que
a) un tourillon axial (120) commence sur la face inférieure de la partie de couverture (110), au moins son extrémité (121) étant complémentaire au contour interne (11) de l'implant (1) et
b) le contre-épaulement de forme annulaire (115) s'étend entre le bord de l'épaulement (114), jusqu'au début du tourillon (120) et
c) un évidement pour recevoir une tête de vis (131) pour une vis (200) applicable occlusalement avec un siège conique (132) ainsi qu'une section de filetage interne (133) placée en-dessous se trouvent à l'intérieur de l' alésage traversant (130) et
d) la transition (112) de la face supérieure (111) à la surface d'enveloppe (113) est arrondie, la surface d'enveloppe (113) possédant un contour convexe en dehors du chanfrein (116).

4. Calotte de cicatrisation in situ (100) selon la revendication 3, caractérisée en ce que le tourillon (120) est tronqué, un bourrelet de centrage simple (118) étant formé au niveau de la transition avec le contre-épaulement (115).

5. Calotte de cicatrisation in situ (100) selon l'une quelconque des revendications 1 à 4, caractérisée en ce qu'on prévoit une vis (200) applicable occlusalement pour la fixation de la calotte de cicatrisation in situ (100) sur l'implant (1) et la vis (200) présente, sur sa tige de vis (220), en dessous de la tête de vis (210), une partie de tige sans filet (221), qui a un diamètre réduit également par rapport à la partie de filetage (222) terminante.

6. Calotte de cicatrisation in situ (100) selon la revendication 5, caractérisée en ce que
a) au niveau de la transition de la vis (200) entre la tête de vis (210) et la tige de vis (220) est prévue une base conique (211) complémentaire du siège conique (132), et
b) la partie supérieure de la tête de vis (210) possède un contour de prise creusé (212) pour y appliquer un outil de rotation.
